# EUROPEAN PATENT APPLICATION

(11) **EP 2 009 939 A1**
(43) Date of publication of application: **31.12.2008**
(21) Application number: 07290823.9
(22) Date of filing: 29.06.2007
(51) Int. Cl.: H04Q 7/30

(54) **Method for transmitting speech over a communication network**

(71) Applicant: Alcatel Lucent, 75008 Paris (FR)
(72) Inventor: Grand, Jean-Yves, 75008 Paris (FR)
(74) Representative: Louiset, Raphael

(57) **Abstract**

Method for transmitting digitized speech over a communication network (**1**) in Tandem Free Operation, from an originating communication device (**2**) connected to an originating network (**4**), to a terminating communication device (**3**) connected to a terminating network (**5**), said method comprising the steps of:
- Digitizing and encoding speech within the originating communication device (**2**) according to a predetermined speech coding standard, thereby generating a first law bit rate coded speech signal,
- Transmitting said first encoded speech signal from the originating communication device (**2**) to the originating network (**4**),
- Generating within the originating network (**4**) a second high bit rate signal composed of the first law bit rate encoded speech signal and a non-coded non-speech signal,
- Transmitting the second high bit rate signal from the originating network (**4**) to the terminating network (**5**),
- Relaying the first law bit rate coded speech signal from the terminating network (**4**) to the terminating communication device (**3**).

## Description

### FIELD OF THE INVENTION

The invention relates to telecommunication networks, and more specifically to networks involving speech transmission.

### BACKGROUND OF THE INVENTION

Speech transmission is complex to handle, for it must preserve interactivity and synchronization of the natural human conversation. In conventional PSTNs *(Public Switched Telephony Networks),* speech is digitized and transmitted at a rate of 64 Kbps *(Kilobits per second).* Many algorithms for converting analog speech to digital form exist, however the most common are those defined by the ITU (*International Telecommunication Union*) standard called G.711, i.e. semi-log A-law and mu- or µ-law. G.711 format has been exploited for digitizing voice by the telephone companies since the late 1960s / early 1970s.

64 Kbps is too high a rate to be transmitted over the air interface in the Mobile networks. In such networks, lower rates prevail for transmissions across the air interface. Several standards may be applied for Mobile networks, providing good transmission quality at low rates. For example, UMTS (Universal Mobile Telecommunication System) applies more recent standards such as ITU G.729 providing an 8 Kbps rate (as explained in Guy PUJOLLE, Les Réseaux, 5th Edition, p.924).

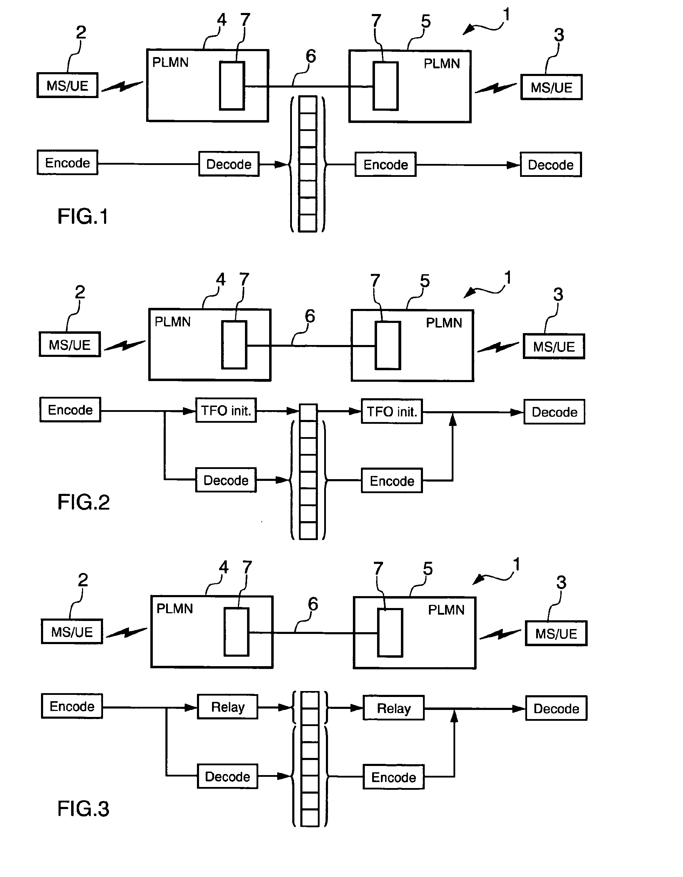

An ordinary mobile to mobile call configuration is disclosed in **FIG.1****.** The signal is transmitted first through the air interface from the local MS (*Mobile Station*) or UE (*User Equipment* in 3G networks) to the local PLMN (*Public Land Mobile Network*), secondly from the local PLMN to the distant PLMN across the fixed network, and third through the air interface again, from the distant PLMN to the distant MS or UE.

In such a configuration, the Speech signal is first encoded in the originating (or local) MS/UE, sent over the air interface to the local PLMN at low rate (such as 8 Kbps) where it is converted to G.711 A-law or µ-law in the local transcoder thereof, carried over the fixed network at high rate (64 Kbps) to the terminating (or distant) PLMN, where it is converted again in the distant transcoder thereof, sent over the air interface to the distant MS/UE at low rate and decoded in the distant MS/UE. In this configuration, called *tandem* configuration, speech is encoded and decoded twice. This double transcoding introduces quality degradation, thereby altering intelligibility of the speech, and requires important available processing power.

One solution to these drawbacks was recently proposed by the 3GPP (*Third Generation Partnership Project*) in *3GPP TS 28.062 V6.3.0 (2006-09)*: when the originating and terminating connections are using the same speech codec, it is possible to transmit transparently the speech frames received from the originating MS/UE to the terminating MS/UE without activating the decoding functions in the originating and terminating PLMNs. This configuration is called TFO (*Tandem Free Operation*).

TFO aims at providing the following advantages:
■ improvement in speech quality by avoiding the double transcoding in the network,
■ possible savings in processing power in the network equipment since the transcoding functions in the Transcoder Units are bypassed.

TFO implementation depends upon the codecs used at both end connections. The most frequent codecs in GSM (*Global System for Mobile communications*) networks are the following:
■ GSM_FR (*GSM Full Rate*), corresponding to a bit rate of 13 Kbps,
■ GSM_EFR (*GSM Enhanced Full Rate*), corresponding to a bit rate of 12.2 Kbps,
■ GSM_HR (*GSM Half Rate*), corresponding to a bit rate of 5.6 Kbps.

In addition to these fixed bit rates codecs, 3GPP introduced the AMR codec (*Adaptative MultiRate*) for 3G GSM (*Third Generation GSM*), the bit rate of which (from 4.75 to 12.2 Kbps) depends upon the transmission conditions encountered. AMR-WB (WideBand) is also suitable: such codec standard, also codified as G.722.2 by ITU-T, was developed after AMR, using the same speech code algorithm but on a wider speech bandwidth (50-70,000 Hz). Like AMR, AMR-WB operates with various bit rates, from 6.60 to 23.85 Kbps. It is to be noted that the lowest bit rate providing excellent speech quality in a clean environment is 12.65 Kbps, whereas higher bit rates are useful in background noise conditions.

When TFO is activated between two end connections using the GSM_HR speech codec, the TFO frames are carried over 8 Kbps channels mapped onto the LSB (*Least Significant Bit*) of the 64 Kbps PCM (*Pulse Code Modulation*) speech samples.

When TFO is activated between two end connections using the GSM_FR or GSM_EFR speech codecs, the TFO Frames are carried over 16 Kbps channels mapped onto the two LSBs of the 64 Kbps PCM speech samples.

When TFO is activated between two end connections using the AMR speech codec, the TFO Frames are carried over 8 or 16 Kbps channels mapped onto the or the two LSB(s) of the 64 Kbps PCM speech samples.

When TFO is activated between two end connections using the AMR-WB speech codec, the TFO Frames are carried over 8, 16, 24 or 48 Kbps channels mapped onto the one, the two, the three or the four LSB(s) of the 64 Kbps PCM speech samples.

Before TFO is activated, the PLMNs exchange full G.711 frames, except the LSB which includes an 8 Kbps TFO initiation signal (see **FIG.2**).

When TFO is activated, quality of speech is unquestionably improved as alleged by the 3GPP, since the speech samples are not transcoded twice, thereby reducing information loss.

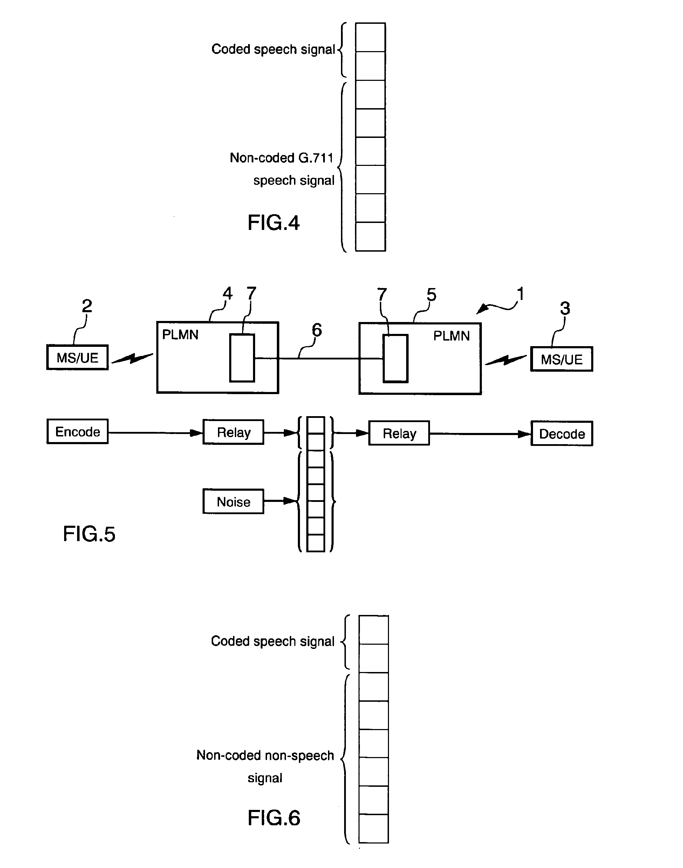

However, when TFO is activated, transcoding functions are not fully bypassed. Only the decoding function of each transcoder in the PLMNs is deactivated, whereas each transcoder continues to convert the Speech signal coming from the Air interface to G.711 A-law or µ-law, only the least or two least significant bits of which are stolen to carry TFO frames, as depicted on **FIG.3****.** The six or seven remaining bits or MSB (Most Significant Bits) of the PCM speech samples (not compressed) are transmitted unchanged (see **FIG.4****).** This aims at facilitating seamless TFO interruption, when for any reason FTO is disabled. However, despite 3GPP wishes, this still requires processing power in the network equipment to decode the compressed signal to G.711 A-law or µ-law.

### SUMMARY OF THE INVENTION

It is an object of the invention to provide a method for transmitting speech over a communication network, allowing for actual processing power savings.

The proposed method comprises the following steps:
- Digitizing and encoding speech within the originating communication device according to a predetermined speech coding standard, thereby generating a first law bit rate coded speech signal,
- Transmitting said first coded speech signal from the originating communication device to the originating network,
- Generating within the originating network a second high bit rate signal composed of the first law bit rate coded speech signal and a non-coded non-speech signal,
- Transmitting the second high bit rate signal from the originating network to the terminating network,
- Relaying the first law bit rate coded speech signal from the terminating network to the terminating communication device.

The above and other objects and advantages of the invention will become apparent from the detailed description of preferred embodiments, considered in conjunction with the accompanying drawings.

### BRIEF DESCRIPTION OF THE DRAWINGS

**FIG.1** is a diagram showing a conventional call configuration.
**FIG.2** is a diagram showing a tandem call configuration in a TFO-compatible mobile network before TFO is initiated or when TFO.
**FIG.3** is a diagram showing a TFO call configuration in a mobile network.
**FIG.4** is a diagram showing the constitution of a byte sent during a conventional TFO call, in which two LSBs are dedicated to compressed digitized speech signal.
**FIG.5** is a diagram showing a TFO call configuration according to one embodiment of the invention.
**FIG.6** is a diagram showing the constitution of a byte sent during a TFO call in a TFO call configuration according to the invention.
**FIG.7** is a diagram showing a parallel configuration of mapping and transcoding functions in a call configuration according to one embodiment of the invention.
**FIG. 8** is a diagram showing a serial configuration of mapping and transcoding functions in a call configuration according to another embodiment of the invention.

### DETAILED DESCRIPTION

A typical mobile communication network 1 is depicted on **FIG.1, FIG.2, FIG.3** and **FIG.5****.**

The network comprises two mobile stations (MS) or user equipments (UE) **2, 3** both connected, through the Air interface, to PLMNs **4, 5** which, in turn, are connected to one another through a fixed network **6**.

The conventional call configurations of **FIG.1, FIG.2** and **FIG.3** are explained hereabove and will therefore not be described again.

The call configuration of **FIG.5****,** however, is not conventional.

The speech signal is first digitized and encoded in the originating MS/UE **2**. More precisely, depending on the network type, the speech signal is encoded through a predetermined conventional codec chosen e.g. among GSM_FR, GSM_EFR or GSM_HR (for 2G GSM networks), or AMR (for 3G GSM networks), thereby generating a first law bit rate coded speech signal.

The first law bit rate encoded speech signal is transmitted, through the air interface, to the local PLMN **4**.

As depicted on **FIG.2****,** before TFO is activated between the MS/UE **2**, **3**, the law bit rate encoded speech signal is conventionally decoded in a transcoder **7** of the local PLMN **4** to G.711 A-law or µ-Law and sent to the distant PLMN **5** at 64 Kbps with the LSB of each byte carrying a TFO initiation information in order to check compatibility of codecs in local and distant MS/UE **2, 3**, thereby preparing TFO to be activated between the MS/UE **2, 3** in case codecs are deemed to be compatible.

As soon as TFO is activated, the transcoder **7** of the local PLMN 4 changes the nature of the signal sent to the distant PLMN **5** and generates a second high bit rate signal composed of the unchanged first law bit rate coded speech signal mapped on **1, 2, 3** or **4** bits of each byte to be sent (depending upon the codec selected in the MS/UE), and a non-coded non-speech signal filling the **4, 5, 6** or **7** remaining bits of the byte, as depicted on **FIG.5** and **FIG.6****.** In the depicted example, the coded speech signal is mapped onto two bits, the remaining 6 bits being filled with the non-coded non-speech signal. However, as **FIG.6** merely discloses a non limitative example, it should be understood that the coded speech signal may be mapped, depending on the speech codec, onto 1 (e.g. with GSM_HR) to 4 bits (e.g. with AMR-WB), the remaining bits (4 to 7) being filled with the non-coded non-speech signal.

The non-coded non-speech signal may be a digitized noise signal, or made of a series of truncated ETSI H55 bytes, or a series of truncated ANSI H7F bytes, or any other type of non significant bytes as long as the generation thereof requires no - or low - process power.

The second high bit rate signal is then transmitted from the local PLMN **4** to the distant PLMN **5**, where the first law bit rate coded speech signal is simply relayed unchanged to the distant MS/UE **3**. The non-speech part of the signal is ignored.

Practically, the processing unit - e.g. a DSP (*Digital Signal Processing*)*,* an FPGA *(Field Programmable Gate Array)* or a GPP (*General Purpose Processor*) *-* within the transcoder **7** of the PLMN 4 or 5 requires two main functions:
- a mapping function **8** ensuring the relaying of the first law bit rate coded speech signal, i.e. introduction of 1 to 4 corresponding bits into each byte of the high bit rate signal,
- a removable transcoding function **9** ensuring the decoding of the first law bit rate speech signal to a G.711 signal (in the local PLMN **4**), or the encoding of the G.711 signal to a low bit rate coded speech signal (in the distant PLMN **5**) when TFO is deactivated.

When TFO is activated, the transcoding function **9** is removed. As soon as the processing unit of the PLMN **4** or **5** is informed that TFO is - or is about to be - deactivated, the processing unit immediately reintroduces the transcoding function **9**, whereby the signal includes the G.711 signal again as disclosed on **FIG.2****.**

The mapping and transcoding functions **8, 9** may be either in parallel or in serial configuration.

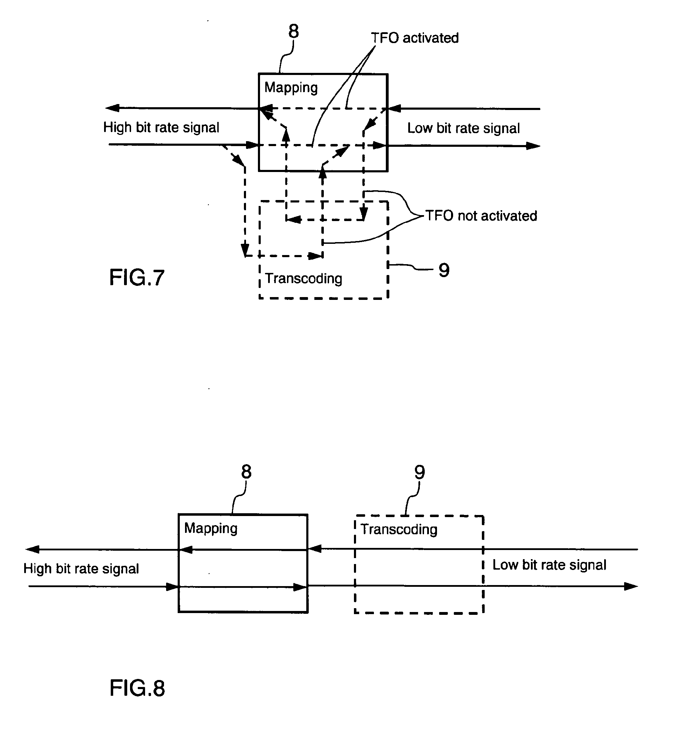

In the parallel configuration, depicted on **FIG.7**, the coded speech signal passes either through the mapping function **8** (when TFO is activated), or through the transcoding function (when TFO is not activated).

In such a configuration as set in a local PLMN **4**, when TFO is activated, only the mapping function **8** is activated, the resulting signal exiting the PLMN **4** being composed, on the one hand, of the unchanged coded speech bits, and on the other hand, of filling non-coded non-speech bits. On the contrary, when TFO is not activated, only the transcoding function **9** is activated, the resulting signal being composed of the full decoded speech signal (G.711).

In the serial configuration, depicted on **FIG.8****,** the coded speech signal always passes through the mapping function **8** (whether TFO is activated or not), and also through the transcoding function **9** when TFO is not activated.

In such a configuration as set in a local PLMN **4**, when TFO is activated, the transcoding function **9** is removed and the signal exiting the PLMN **4** is composed of the unchanged coded speech bits and filling non-coded non-speech bits. On the contrary, when TFO is not activated, the transcoding function **9** is activated and the resulting signal is composed of a combination of the coded speech signal on the LSB(s) and the decoded speech signal (G.711) on the remaining MSBs.

In both configurations, when TFO is activated, the transcoding function is removed, and the saved process power can be usefully dedicated to other tasks.

The functions depicted hereabove may be implemented either in hardware (two separate boxes) or in software (two separate functions in a computer program) in a gateway or in a BSC (*Base Station Controller*)*,* depending on the network configuration, several examples of which are listed hereafter:
- connection between a 2G access (e.g. GSM) and an MSC (Mobile Services Switching Center),
- connection between a 2G access and a 3G backbone,
- connection between a 2G and a 3G access,
- connection between a 3G access and a TDM backbone (a 2G or 3G access may be set at the other side of the TDM backbone),
- connection between a 3G backbone and a TDM backbone.

## Claims

1. Method for transmitting digitized speech over a communication network (**1**) in Tandem Free Operation, from an originating communication device (**2**) connected to an originating network (**4**), to a terminating communication device (**3**) connected to a terminating network (5), said method comprising the steps of:
- Digitizing and encoding speech within the originating communication device (**2**) according to a predetermined speech coding standard, thereby generating a first law bit rate coded speech signal,
- Transmitting said first encoded speech signal from the originating communication device (**2**) to the originating network (**4**),
- Generating within the originating network (**4**) a second high bit rate signal composed of the first law bit rate encoded speech signal and a non-coded non-speech signal,
- Transmitting the second high bit rate signal from the originating network (**4**) to the terminating network (**5**),
- Relaying the first law bit rate coded speech signal from the terminating network (**4**) to the terminating communication device (**3**).

2. Method according to claim 1, wherein the non-coded non-speech signal is a digitized noise signal.

3. Method according to claim 2, wherein the non-coded non-speech signal is a truncated ETSI H55 byte.

4. Method according to claim 2, wherein the non-coded non-speech signal is a truncated ANSI H7F byte.

5. Method according to claim 1, wherein the non-coded non-speech signal is composed of 0 value bits.

6. Communication device including the following functions:
- a mapping function ensuring the relaying of a first law bit rate coded speech signal received from an originating communication device (**2**) towards a terminating communication device (**3**),
- a removable transcoding function ensuring the decoding of the first law bit rate speech signal to a non-coded speech signal, said function being removed when the communication between the originating device (**2**) and the terminating device (**3**) is in Tandem Free Operation.

7. Communication device according to claim 6, wherein the mapping function provides introduction of 1 to 4 corresponding bits into each byte of the high bit rate signal.

8. Computer program implemented in a communication device, said computer program including the following instructions:
- relaying a first law bit rate coded speech signal received from an originating communication device (**2**) towards a terminating communication device (**3**),
- decoding the first law bit rate speech signal to a non-coded speech signal only when the communication between the originating communication device (**2**) and the terminating communication device (**3**) is in Tandem Free Operation.

## Amended claims

### Amended claims in accordance with Rule 137(2) EPC.

**1.** Method for transmitting digitized speech over a communication network (1) in Tandem Free Operation, from an originating communication device (2) connected to an originating network (4), to a terminating communication device (3) connected to a terminating network (5), said method comprising the steps of:
- Digitizing and encoding speech within the originating communication device (2) according to a predetermined speech coding standard, thereby generating a low bit rate coded speech signal,
- Transmitting said encoded speech signal from the originating communication device (2) to the originating network (4),
- Generating within the originating network (4) a high bit rate signal composed of the low bit rate encoded speech signal mapped on 1 to 4 bits of each byte of the high bit rate signal, depending upon the speech coding standard, and a non-coded non-speech signal filling the remaining 4 to 7 bits of said byte,
- Transmitting the high bit rate signal from the originating network (4) to the terminating network (5),
- Relaying the low bit rate coded speech signal from the terminating network (4) to the terminating communication device (3).

**2.** Method according to claim 1, wherein the non-coded non-speech signal is a digitized noise signal.

**3.** Method according to claim 2, wherein the non-coded non-speech signal is a truncated ETSI H55 byte.

**4.** Method according to claim 2, wherein the non-coded non-speech signal is a truncated ANSI H7F byte.

**5.** Method according to claim 1, wherein the non-coded non-speech signal is composed of 0 value bits.

**6.** Communication device including the following functions:
- a mapping function ensuring the relaying of a low bit rate coded speech signal received from an originating communication device (2) towards a terminating communication device (3), whereby said mapping function introduces 1 to 4 bits of said low bit rate coded speech signal into each byte of a high bit rate signal, depending upon a speech coding standard used for the low bit rate signal;
- a removable transcoding function ensuring the decoding of the low bit rate speech signal to a non-coded speech signal, said function being removed when the communication between the originating device (2) and the terminating device (3) is in Tandem Free Operation.

**7.** Computer program implemented in a communication device, said computer program including the following instructions:
- relaying a low bit rate coded speech signal received from an originating communication device (2) towards a terminating communication device (3), whereby 1 to 4 bits of said low bit rate coded speech signal are introduced into each byte of a high bit rate signal, depending upon a speech coding standard used for the low bit rate signal
- decoding the low bit rate speech signal to a non-coded speech signal only when the communication between the originating communication device (2) and the terminating communication device (3) is not in Tandem Free Operation.
